# FASCICULE DE BREVET EUROPEEN

(11) **EP 0 782 241 B1**
(45) Date de publication et mention de la délivrance du brevet: **14.11.2001**
(21) Numéro de dépôt: 96402884.9
(22) Date de dépôt: 24.12.1996
(51) Int. Cl.: H02K 5/167, F16C 33/08, F16C 35/02

(54) **Moteur à courant continu avec palier de guidage d'arbre**
Gleichstrommotor mit Wellenführungslager
DC motor with shaft guiding bearing

(30) Priorité: 27.12.1995 FR 9515549
(43) Date de publication de la demande: 02.07.1997
(73) Titulaire: VALEO SYSTEMES D'ESSUYAGE, 78321 La Verrière (FR)
(72) Inventeur: Vacca, Frédéric, 78910 Behoust (FR)
(74) Mandataire: Martin, Jean-Jacques

(56) Documents cités:
- EP-A- 0 485 001
- GB-A- 2 152 294
- GB-A- 2 161 029
- US-A- 3 250 932

## Description

L'invention concerne les moteurs à courant continu, un flasque pour carter et un procédé de réalisation d'un moteur à courant continu.

Le document EP 0 343 126 A1 décrit un moteur à courant continu présentant l'avantage d'avoir une faible dimension suivant la direction de l'arbre du moteur. Ce moteur comporte un arbre rotatif et un flasque d'obturation du carter en matière plastique présentant un palier définissant un logement cylindrique dans lequel est reçue une extrémité terminale de l'arbre.

En pratique, les moteurs de ce type disponibles dans le commerce comportent en outre une bague de guidage engagée sur l'extrémité terminale de l'arbre et reçue dans le logement en y étant insérée à force. Malgré ce montage à force, il existe un risque que, durant le fonctionnement du moteur, la bague sorte petit à petit du logement, notamment sous l'effet des vibrations.

On connaît aussi, par le document GB-A-2 152 294, un moteur comportant un logement pour une bague dont la surface externe est en partie sphérique, muni d'une pluralité de parties sphériques de doigts flexibles.

Le document EP-0 485 001 A2 décrit un flasque de moteur présentant un palier cylindrique ayant un bord adjacent au flasque et un fond distant du flasque, et adapté à recevoir une bague dans laquelle est introduite une extrémité de l'arbre du moteur. Le bord du palier adjacent au flasque présente un bourrelet périphérique annulaire continu s'étendant en saillie en direction de l'axe du palier et interdisant la sortie de la bague. Pour réaliser le moteur, on fabrique d'abord le flasque en donnant au palier sa forme cylindrique. Puis on introduit la bague dans le palier. Enfin, on déforme par emboutissage le bord du palier pour réaliser le bourrelet afin de bloquer la bague dans le palier. Néanmoins, ce bourrelet constitue une quantité de matière relativement importante. De plus, il est nécessaire de réaliser ce bourrelet après introduction de la bague dans le logement. En outre, le procédé de réalisation du bourrelet par emboutissage avec la bague en place est relativement lourd à mettre en oeuvre. Ces deux derniers inconvénients compliquent en particulier l'assemblage du moteur sur chaîne.

Un but de l'invention est de fournir un moteur compact suivant la direction axiale, nécessitant une faible quantité de matière pour bloquer la bague à l'intérieur du palier et dans lequel la forme du flasque peut être totalement achevée avant introduction de la bague dans le palier, en vue de simplifier l'assemblage du moteur.

En vue de la réalisation de ce but, on prévoit selon l'invention un moteur à courant continu avec les caractéristiques de la revendication 1.

Les reliefs discontinus constituent une quantité de matière réduite. Cette quantité de matière peut être d'autant plus réduite qu'on donne aux reliefs des dimensions peu importantes, notamment le long du bord du palier. En outre, les reliefs peuvent être réalisés lors de la fabrication du flasque. En effet, les reliefs étant discontinus, ils s'écartent lorsque la bague est introduite dans le logement pour ensuite reprendre leur position initiale plus ou moins élastiquement en vue de bloquer la bague dans le palier. Aucune mise en forme du palier n'est donc nécessaire après introduction de la bague. On simplifie dès lors l'assemblage du moteur sur chaîne. De plus, le flasque a une forme simple.

On prévoit également selon l'invention un procédé de réalisation d'un moteur selon l'invention, comprenant les étapes successives consistant à :
- fabriquer le flasque avec les reliefs ; et
- engager la bague dans le logement.

On prévoit en outre selon l'invention un flasque pour carter de moteur à courant continu avec les caractéristiques de la revendication 10.

Ce flasque est adapté à faire partie du moteur selon l'invention.

D'autres avantages de l'invention apparaîtront encore à la lecture de la description qui va suivre d'un mode préféré de réalisation donné à titre d'exemple non limitatif. Aux dessins annexés :
- la figure 1 est une vue en coupe axiale d'un moteur selon l'invention ; et
- la figure 2 est une vue agrandie du détail D de la figure 1, montrant le flasque seul.

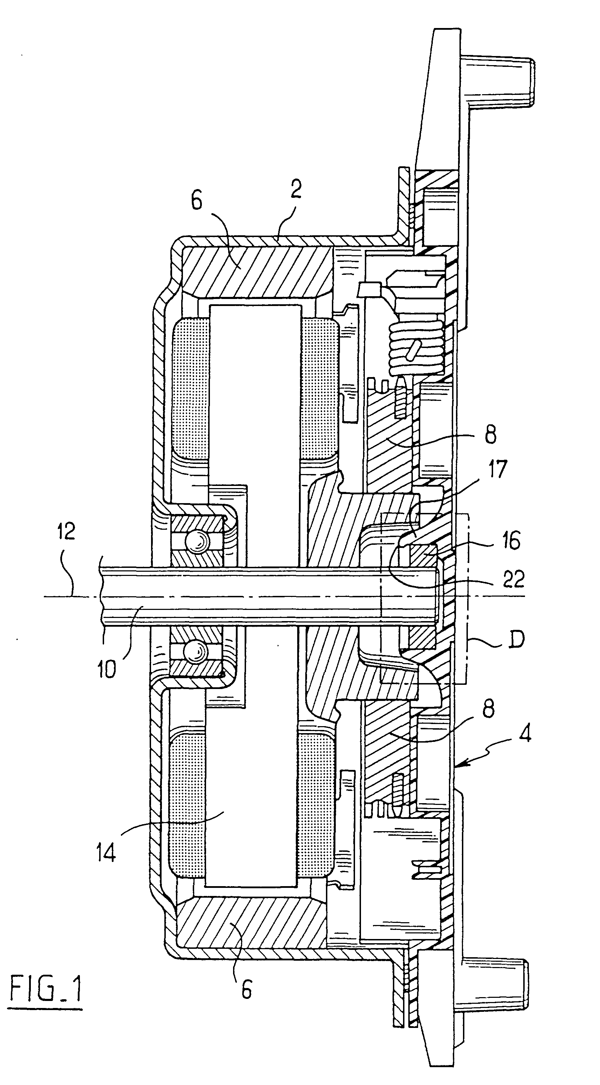

En référence à la figure 1, le moteur à courant continu de ventilateur de véhicule automobile comporte une partie fixe et une partie tournante. La partie fixe comporte une carcasse métallique 2 de forme générale cylindrique munie d'un fond à une extrémité, un flasque 4 en matière plastique obturant la carcasse à son autre extrémité, des ferrites ou aimants permanents 6 fixés à la carcasse, et des balais 8 fixés au flasque 4 et en contact avec la partie tournante. La partie tournante comporte un arbre rotatif 10 d'axe 12 traversant le fond de la carcasse et un induit 14 monté sur l'arbre.

Une bague métallique 16 est engagée sur une extrémité terminale de l'arbre. Le flasque 4 présente un palier 17 ayant une face interne 20 de forme cylindrique continue centrée sur l'axe 12, définissant un logement dans lequel est reçue la bague 16. Le palier 17 présente un fond 19 et un bord 18 opposé axialement au fond. Le palier 17 s'étend en saillie d'une face interne du flasque 4. Le fond 19 du palier se trouve dans le plan général du flasque 4 et est dépourvu d'orifice. Le bord 18 du palier s'étend à distance de la face interne du flasque. Le diamètre de la bague 16 est sensiblement identique au diamètre du logement et la bague est engagée à force dans celui-ci. Le palier 17 et la bague 16 assurent ainsi le positionnement et le guidage de l'extrémité terminale de l'arbre.

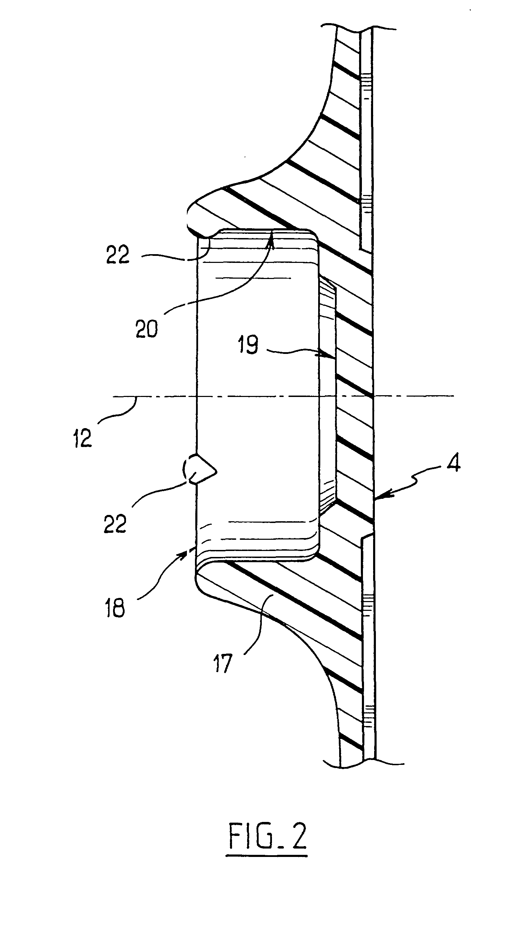

En référence notamment à la figure 2, le palier présente trois reliefs discontinus 22 séparés et distants les uns des autres, qui sont ici des bossages à profil circulaire parallèlement à l'axe 12. Les reliefs sont adjacents au bord 18 du palier et en l'espèce situés sur ce bord. Seulement deux reliefs sur les trois sont visibles à la figure 2 en raison de la coupe. Les reliefs 22 s'étendent radialement en direction de l'axe 12, en saillie de la face interne 20 du palier. Ils s'étendent également suivant la direction axiale en saillie du bord 18. Chaque relief présente une face à profil arrondi convexe d'un côté du relief opposé au fond. Une partie de cette face est orientée vers l'axe. Les reliefs s'étendent dans un même plan perpendiculaire à l'axe et sont distants entre eux. Les trois reliefs sont régulièrement répartis sur la circonférence du bord 18, en définissant entre eux des angles de 120° autour de l'axe 12. Les reliefs sont venus de moulage lors de la fabrication du flasque 4.

A titre d'exemple, le diamètre du logement cylindrique est ici de 14 millimètres et les reliefs s'étendent sur 0,5 millimètre en direction de l'axe 12 en saillie de la face 20.

Au montage, on engage à force la bague 16 entre les reliefs 22. La forme arrondie des reliefs crée au contact du bord de la bague un effet de rampe qui entraîne l'écartement élastique radial des reliefs lorsqu'on introduit la bague dans le logement. Une fois que la bague a dépassé les reliefs et se trouve dans le logement, les reliefs reprennent leur position initiale. Ils s'étendent alors dans la trajectoire de la bague et interdisent sa sortie. Ainsi, les reliefs sont adaptés à s'écarter élastiquement suivant la direction radiale lorsqu'on introduit la bague dans le logement.

Bien entendu, on pourra apporter à l'invention de nombreuses modifications sans sortir du cadre de celle-ci.

On pourra modifier la forme des reliefs et leur donner par exemple une forme d'ergot ou de griffe dont la pointe est dirigée vers l'intérieur du logement. On pourra réduire ou augmenter le nombre précité de reliefs. Les reliefs pourront s'étendre sur la face interne 20 à une faible distance du bord 18.

L'invention est applicable à d'autres domaines que celui des moteurs de ventilateur de véhicule automobile.

## Revendications

1. Moteur à courant continu comportant un arbre rotatif (10), une bague (16) engagée sur une extrémité terminale de l'arbre et un carter comportant un flasque (4) présentant un palier (17) s'étendant en saillie d'une face interne du flasque (4), le palier (17) présentant une surface interne (20) de forme cylindrique continue qui délimite un logement dans lequel est reçue la bague, le palier présentant un fond (19) s'étendant dans le plan général du flasque (4) et un bord (18) opposé au fond, le palier présentant plusieurs reliefs discontinus (22) adjacents au bord du palier et s'étendant radialement en direction d'un axe (12) du logement en saillie de la face interne du palier (17), les reliefs s'étendant dans un même plan perpendiculaire à l'axe (12) et étant distants entre eux.

2. Moteur selon la revendication 1, **caractérisé en ce que** les reliefs (22) sont situés sur le bord (18) du palier.

3. Moteur selon la revendication 1 ou 2, **caractérisé en ce que** les reliefs (22) sont adaptés à s'écarter élastiquement suivant la direction radiale lorsqu'on introduit la bague (16) dans le logement.

4. Moteur selon l'une quelconque des revendications 1 à 3, **caractérisé en ce que** les reliefs (22) présentent une face à profil arrondi d'un côté du relief opposé au fond (19).

5. Moteur selon l'une quelconque des revendications 1 à 4, **caractérisé en ce que** le palier (17) s'étend en saillie d'une face interne du flasque (4).

6. Moteur selon l'une quelconque des revendications 1 à 5, **caractérisé en ce que** le flasque (4) est en matière plastique, les reliefs (22) étant venus de moulage.

7. Moteur selon l'une quelconque des revendications 1 à 6, **caractérisé en ce qu'**il s'agit d'un moteur de ventilateur de véhicule automobile.

8. Procédé de réalisation d'un moteur selon l'une quelconque des revendications 1 à 7, **caractérisé en ce qu'**il comprend les étapes successives consistant à :
- fabriquer le flasque (4) avec les reliefs (22) ; et
- engager la bague (16) dans le logement.

9. Procédé selon la revendication 8, **caractérisé en ce que** le flasque (4) est en matière plastique, les reliefs (22) étant venus de moulage.

10. Flasque (4) pour carter de moteur à courant continu, présentant un palier (17) s'étendant en saillie d'une face interne du flasque (4), le palier (17) présentant une surface interne (20) de forme cylindrique continue qui délimite un logement destiné à recevoir une bague (16), le palier (17) présentant un fond (19) se trouvant dans un plan général du flasque (4) et un bord (18) opposé au fond, le palier présentant plusieurs reliefs discontinus (22) adjacents au bord du palier et s'étendant radialement en direction d'un axe (12) du logement en saillie de la face interne du palier (17), les reliefs s'étendant dans un même plan perpendiculaire à l'axe (12) et étant distants entre eux.

## Claims

1. DC motor having a rotating shaft (10), a ring (16) engaged on a terminal end of the shaft and a casing having a flange (4) with a bearing (17) extending projecting from an internal face of the flange (4), the bearing (17) having an internal surface (20) with a continuous cylindrical shape which delimits a housing in which the ring is received, the bearing having a base (19) lying in the general plane of the flange (4) and an edge (18) opposite to the base, the bearing having several discontinuous reliefs (22) adjacent to the edge of the bearing and extending radially in the direction of an axis (12) of the housing projecting from the internal face of the bearing (17), the reliefs lying in the same plane perpendicular to the axis (12) and being distant from each other.

2. Motor according to Claim 1, **characterised in that** the reliefs (22) are situated on the edge (18) of the bearing.

3. Motor according to Claim 1 or 2, **characterised in that** the reliefs (22) are adapted to move apart elastically in the radial direction when the ring (16) is inserted in the housing.

4. Motor according to any one of Claims 1 to 3, **characterised in that** the reliefs (22) have a base with a rounded profile on one side of the relief opposite the base (19).

5. Motor according to any one of Claims 1 to 4, **characterised in that** the bearing (17) extends projecting from an internal face of the flange (4).

6. Motor according to any one of Claims 1 to 5, **characterised in that** the flange (4) is made from plastics material, the reliefs (22) being moulded in one piece.

7. Motor according to any one of Claims 1 to 6, **characterised in that** it is a case of a motor vehicle fan motor.

8. Method of producing a motor according to any one of Claims 1 to 7, **characterised in that** it comprises the successive steps consisting of:
- making the flange (4) with the reliefs (22); and
- engaging the ring (16) in the housing.

9. Method according to Claim 8, **characterised in that** the flange (4) is made from plastics material, the reliefs (22) being moulded in one piece.

10. Flange (4) for a DC motor casing, having a bearing (17) extending projecting from an internal face of the flange (4), the bearing (17) having an internal surface (20) with a continuous cylindrical shape which delimits a housing intended to receive a ring (16), the bearing (17) having a base (19) situated in a general plane of the flange (4) and an edge (18) opposite to the base, the bearing having several discontinuous reliefs (22) adjacent to the edge of the bearing and extending radially in the direction of an axis (12) of the housing projecting from the internal face of the bearing (17), the reliefs lying in the same plane perpendicular to the axis (12) and being distant from each other.

## Patentansprüche

1. Gleichstrommotor mit einer Rotationswelle (10), einem auf ein Ende der Welle aufgesetzten Ring (16) und einem Gehäuse mit einem Schild (4), das ein Lager (17) aufweist, das sich über eine Innenseite des Schildes (4) hinaus erstreckt, wobei das Lager (17) eine Innenfläche (20) mit durchgehender zylindrischer Form aufweist, die einen Sitz für die Aufnahme des Rings begrenzt, und wobei das Lager einen sich in der Hauptebene des Schildes (4) erstreckenden Boden (19) und einen dem Boden entgegengesetzten Rand (18) aufweist, wobei das Lager ferner mehrere unterbrochene Vorsprünge (22) aufweist, die an den Rand des Lagers angrenzen und sich über die Innenseite des Lagers (17) vorstehend radial in Richtung einer Achse (12) des Sitzes erstrecken, wobei sich die Vorsprünge in einer gleichen senkrecht zur Achse (12) verlaufenden Ebene erstrecken und voneinander beabstandet sind.

2. Motor nach Anspruch 1,
**dadurch gekennzeichnet, daß** die Vorsprünge (22) auf dem Rand (18) des Lagers angeordnet sind.

3. Motor nach Anspruch 1 oder 2,
**dadurch gekennzeichnet, daß** die Vorsprünge (22) elastisch in radialer Richtung nachgeben können, wenn der Ring (16) in den Sitz eingeführt wird.

4. Motor nach einem der Ansprüche 1 bis 3,
**dadurch gekennzeichnet, daß** die Vorsprünge (22) eine Fläche mit abgerundetem Profil auf einer dem Boden (19) entgegengesetzten Seite des Vorsprungs aufweisen.

5. Motor nach einem der Ansprüche 1 bis 4,
**dadurch gekennzeichnet, daß** das Lager (17) sich über eine Innenseite des Schildes (4) hinaus erstreckt.

6. Motor nach einem der Ansprüche 1 bis 5,
**dadurch gekennzeichnet, daß** das Schild (4) aus Kunststoff ist und die Vorsprünge (22) beim Gießvorgang entstehen.

7. Motor nach einem der Ansprüche 1 bis 6,
**dadurch gekennzeichnet, daß** es sich um einen Ventilatormotor eines Kraftfahrzeugs handelt.

8. Herstellungsverfahren eines Motors nach einem der Ansprüche 1 bis 7,
**dadurch gekennzeichnet, daß** das Verfahren aufeinanderfolgende Schritte umfasst, die bestehen im:
- Herstellen des Schildes (4) mit den Vorsprüngen (22) herzu stellen, und
- Einsetzen des Ringes (16) in den Sitz.

9. Verfahren nach Anspruch 8,
**dadurch gekennzeichnet, daß** das Schild (4) aus Kunststoff ist und die Vorsprünge (22) beim Gießvorgang entstehen.

10. Schild (4) für das Gehäuse eines Gleichstrommotors, das ein Lager (17) aufweist, das sich über eine Innenseite des Schildes (4) hinaus erstreckt, wobei das Lager (17) eine Innenfläche (20) mit durchgehender zylindrischer Form aufweist, die einen Sitz zur Aufnahme eines Rings (16) begrenzt, wobei das Lager (17) einen sich in einer Hauptebene des Schildes (4) befindenden Boden (19) und einen dem Boden entgegengesetzten Rand (18) aufweist, und wobei das Lager mehrere unterbrochene Vorsprünge (22) aufweist, die an den Rand des Lagers angrenzen und sich über die Innenseite des Lagers (17) hinaus radial in Richtung einer Achse (12) des Sitzes erstrecken, wobei sich die Vorsprünge in einer gleichen senkrecht zur Achse (12) verlaufenden Ebene erstrecken und voneinander beabstandet sind.
